# FASCICULE DE BREVET EUROPEEN

(11) **EP 2 459 633 B1**
(45) Date de publication et mention de la délivrance du brevet: **08.05.2013**
(21) Numéro de dépôt: 10735024.1
(22) Date de dépôt: 29.07.2010
(51) Int. Cl.: C08K 3/22, G21F 1/10

(54) **MATERIAU ELASTOMERE RADIO-ATTENUATEUR, GANT MULTICOUCHE DE PROTECTION CONTRE LES RAYONNEMENTS IONISANTS ET LEURS UTILISATIONS**
STRAHLUNGSDÄMMENDER ELASTOMERSTOFF, MEHRSCHICHTIGER HANDSCHUH ALS SCHUTZ VOR IONENSTRAHLUNG UND VERWENDUNG
RADIATION-ATTENUATING ELASTOMER MATERIAL, MULTI-LAYER GLOVE FOR PROTECTION AGAINST IONISING RADIATION AND USES THEREOF

(30) Priorité: 31.07.2009 FR 0955389
(43) Date de publication de la demande: 06.06.2012
(73) Titulaire: AREVA NC, 75009 Paris (FR); Piercan, 75013 Paris (FR)
(72) Inventeur: LARMIGNY, Jean-Philippe, F-07700 Saint Just D'ardeche (FR); MATHIEU, Jean-Paul, F-84500 Bollene (FR); GUERIN, Dominique, F-14710 Trevieres (FR); DOBROWOLSKI, Antoine, F-14400 Bayeux (FR)
(74) Mandataire: Ilgart, Jean-Christophe
(86) Numéro de dépôt international: PCT/EP2010/061052
(87) Numéro de publication internationale: WO 2011/012681

(56) Documents cités:
- WO-A1-2004/114323
- WO-A2-2006/069007
- US-A1- 2008 128 658

## Description

### DOMAINE TECHNIQUE

La présente invention se rapporte à un matériau élastomère radio-atténuateur, c'est-à-dire ayant la propriété d'atténuer les rayonnements ionisants, et en particulier ceux produits par des poudres entrant dans la fabrication de combustibles nucléaires au plutonium.

Elle se rapporte également à l'utilisation de ce matériau élastomère pour la fabrication d'articles de protection contre les rayonnements ionisants.

Elle se rapporte encore à un gant multicouche de protection contre les rayonnements ionisants dont au moins une couche est constituée par ledit matériau élastomère, ainsi qu'à l'utilisation de ce gant pour la protection contre les rayonnements ionisants émis par des poudres entrant dans la fabrication de combustibles nucléaires.

### ÉTAT DE LA TECHNIQUE ANTÉRIEURE

Dans un certain nombre de professions, il est usuel d'utiliser des gants et autres articles de protection contre les rayonnements ionisants.

C'est notamment le cas dans l'industrie nucléaire où certaines matières radioactives comme les poudres de combustibles nucléaires sont manipulées dans des boites à gants, c'est-à-dire des enceintes closes qui sont munies de gants propres à protéger les mains, les avant-bras et une partie des bras du manipulateur.

Mais c'est aussi le cas en médecine où les rayonnements ionisants sont utilisés à des fins diagnostiques et thérapeutiques, dans l'industrie des matières plastiques où des irradiations sont utilisées pour obtenir des effets chimiques de polymérisation, de greffage, de réticulation ou de dégradation de polymères, ou encore dans les laboratoires d'inspection et de contrôle, par exemple de pièces manufacturées, où des techniques analytiques basées sur l'utilisation de rayonnements ionisants sont employées.

La plupart des gants de radioprotection actuellement disponibles sur le marché sont des gants multicouches qui comprennent une couche formée d'un élastomère dans lequel sont dispersées de fines particules de plomb, sous forme de métal, d'oxyde ou de sel, et qui est prise en sandwich entre deux couches qui ne sont formées, elles, que d'un élastomère.

Compte-tenu de la toxicité du plomb et de ses composés, la fabrication de ces gants nécessite un équipement lourd et coûteux pour prévenir toute contamination du personnel en charge de cette fabrication. De plus, l'élimination des déchets issus de la fabrication de ces gants ainsi que celle des gants usagés nécessite des filières spécifiques de collecte et de traitement, à défaut de quoi ils sont tout simplement éliminés dans des décharges avec toutes les conséquences néfastes sur l'environnement que cela peut impliquer.

Aussi a-t-il été récemment proposé de remplacer l'utilisation du plomb en tant que charge radio-opaque par celle d'autres métaux qui sont également capables d'atténuer les rayonnements ionisants mais qui ne sont pas toxiques ou, en tout cas, présentent une toxicité moindre.

Ainsi, par exemple, le brevet US 5,548,125 (référence **[1]**), préconise d'utiliser des particules de tungstène dispersées dans un caoutchouc naturel ou dans un caoutchouc éthylène propylène diène, tandis que la demande de brevet US 2004/0262546 (référence [2]) préconise d'utiliser des particules d'oxyde de bismuth, seules ou en mélange avec des particules d'oxyde de tungstène, d'oxyde d'étain ou d'oxyde d'étain/antimoine dispersées dans un caoutchouc naturel.

Il est communément admis qu'avec des charges radio-opaques comme le tungstène, le bismuth, l'étain et leurs oxydes, dont le pouvoir radio-atténuateur est inférieur à celui du plomb, il est extrêmement difficile d'obtenir des gants qui, tout en présentant une efficacité à atténuer les rayonnements ionisants comparable à celle de gants chargés en plomb, aient des caractéristiques satisfaisantes de souplesse et, donc, de confort pour celui qui les porte.

Ce problème, qui est lié au fait qu'avec des charges au pouvoir radio-atténuateur moindre que celui du plomb, il est nécessaire, pour obtenir une couche en élastomère propre à assurer une radioprotection comparable à celle d'une couche en élastomère chargé en plomb, d'incorporer dans cet élastomère une quantité de charges bien supérieure à celle requise dans le cas d'une charge plombifère, est exposé de façon détaillée dans la demande de brevet français 2 911 991 (référence **[3]**).

Ce document propose d'ailleurs de le résoudre en encapsulant la charge radio-opaque, en l'espèce du bismuth sous forme de trioxyde, dans des gouttelettes liquides qui sont dispersées au sein de la couche en élastomère. La disparition de l'interface entre les particules de trioxyde de bismuth et l'élastomère ainsi que la nature mobile de la phase liquide dispersée supprimeraient l'effet rigidifiant du trioxyde de bismuth.

Or, dans le cadre de leurs travaux, les Inventeurs ont constaté que, contre toute attente, l'utilisation, en tant que charge radio-opaque, d'une poudre comprenant du trioxyde de bismuth, du trioxyde de tungstène et du trioxyde de lanthane dans des proportions convenablement choisies, permet d'obtenir des gants qui, tout en présentant des propriétés de radio-atténuation équivalentes à celles d'un gant comprenant une couche en élastomère chargé en oxyde de plomb, présentent une souplesse comparable à celle de gants uniquement constitués d'un élastomère.

Et c'est sur cette constatation qu'est basée la présente invention.

### EXPOSÉ DE L'INVENTION

L'invention a donc, en premier lieu, pour objet un matériau élastomère utile pour la fabrication d'articles de protection contre les rayonnements ionisants, qui comprend un élastomère dans lequel est dispersée une poudre d'oxydes métalliques, et qui est caractérisé en ce que la poudre d'oxydes métalliques comprend de 70 à 90% en masse de trioxyde de bismuth, de 5 à 15% en masse de trioxyde de tungstène et de 5 à 15% de trioxyde de lanthane.

Conformément à l'invention, les proportions respectives de l'élastomère et de la poudre d'oxydes métalliques dans le matériau peuvent varier dans une large mesure en fonction de l'usage auquel ce matériau est destiné et, notamment, du niveau de radio-atténuation et des propriétés mécaniques qui sont recherchées dans le cadre de cet usage.

Ceci étant, on préfère généralement que l'élastomère représente de 15 à 35% en masse de la masse du matériau et que la poudre d'oxydes métalliques représente, elle, de 65 à 85% en masse de la masse du matériau.

Pour un usage comme la fabrication de gants et, notamment, de gants destinés à la manipulation de poudres de combustibles nucléaires, on préfère que l'élastomère représente 25 ± 2% en masse de la masse du matériau et que la poudre d'oxydes métalliques représente 75 ± 2% en masse de la masse du matériau, de telles proportions assurant, en effet, un excellent compromis entre les propriétés de radio-atténuation et les caractéristiques de souplesse requises pour ce type de gant.

Dans tous les cas, la poudre d'oxydes métalliques comprend, de préférence, 80 ± 2% en masse de trioxyde de bismuth, 10 ± 1% en masse de trioxyde de tungstène et 10 ± 1% en masse de trioxyde de lanthane, ces proportions entre les différents oxydes s'étant, en effet, révélées conférer au matériau des propriétés de radio-atténuation optimales.

Par ailleurs, la poudre d'oxydes métalliques est, de préférence, constituée de particules dont au moins 90% en nombre ont une taille comprise entre 1 et 100 µm et, mieux encore, au moins 80% en nombre ont une taille comprise entre 1 et 50 µm et ce, de manière à obtenir une répartition de cette poudre la plus homogène possible dans l'élastomère.

Conformément à l'invention, l'élastomère peut être choisi parmi de très nombreux élastomères et, en particulier, parmi le caoutchouc naturel, les polyisoprènes de synthèse, les polybutadiènes, les polychloroprènes, les polyéthylènes chlorosulfonés, les polyuréthannes élastomères, les élastomères fluorés (encore connus sous le nom de fluoroélastomères), les copolymères d'isoprène-isobutylène (encore connus sous le nom de caoutchoucs butyles), les copolymères d'éthylène-propylène-diène (ou EPDM), les copolymères séquencés de styrène-isoprène-styrène (ou SIS), les copolymères séquencés de styrène-éthylène-butylène-styrène (ou SEBS), et leurs mélanges, étant entendu que le choix de l'élastomère est, là également, fonction de l'usage auquel le matériau est destiné.

Ainsi, par exemple, pour la fabrication de gants, l'élastomère est, de préférence, choisi parmi les polychloroprènes et, mieux encore, parmi les polychloroprènes qui résistent à la cristallisation et conservent, de ce fait, particulièrement bien leur souplesse au cours du temps. De tels polychloroprènes sont, par exemple, commercialisés par la société DuPont Performance Elastomers sous les dénominations Neoprene^{®} WRT et Neoprene^{®} WD.

Conformément à l'invention, le matériau peut comprendre de plus, selon l'usage auquel il est destiné et la manière dont il va être mis en oeuvre dans le cadre de cet usage, un ou plusieurs adjuvants du type de ceux classiquement employés dans l'industrie des polymères comme un ou plusieurs agents plastifiants, agents flexibilisants, agents antistatiques, agents lubrifiants, promoteurs d'adhérence ou colorants, auquel cas la masse totale de ces adjuvants ne représente, de préférence, pas plus de 10% de la masse du matériau.

Le matériau élastomère selon l'invention peut être préparé par un procédé qui comprend :
- le mélange à sec de l'élastomère avec le trioxyde de bismuth, le trioxyde de tungstène, le trioxyde de lanthane et le ou les éventuels adjuvants, par exemple dans un mélangeur interne ; et
- la transformation du mélange ainsi obtenu en un matériau.

De préférence, le mélange est transformé, par exemple par calandrage, étirage et granulation, en un matériau qui se présente sous la forme de granulés propres à être ensuite utilisés pour la fabrication d'articles de protection contre les rayonnements ionisants.

L'invention a donc aussi pour objet l'utilisation d'un matériau élastomère tel que précédemment défini pour la fabrication d'un article de protection contre les rayonnements ionisants.

Compte tenu de la nature élastomérique du matériau selon l'invention, l'article de protection est, de préférence, un article de protection individuelle tel qu'un tablier, une chasuble, une veste, une jupe, un gant, une manchette, un protège-thyroïde, un protège-gonades, un bandeau de protection oculaire, une brassière de protection mammaire ou bien encore un champ ou drap opératoire.

Toutefois, il peut également s'agir d'un article de protection collective comme, par exemple, un rideau dont on souhaite qu'il présente une certaine souplesse, notamment pour des commodités de rangement.

Dans tous les cas, cet article de protection, qui peut comprendre une ou plusieurs couches constituées du matériau élastomère selon l'invention, associée(s) ou non à une ou plusieurs couches en un autre matériau comme, par exemple, un matériau textile, peut être fabriqué par transformation du matériau élastomère selon l'invention en films, feuilles ou plaques, par des techniques classiques de moulage, d'extrusion ou analogues, puis par découpe de pièces de forme appropriée dans ces films, feuilles ou plaques, et assemblage de ces pièces entre elles et/ou avec d'autres pièces par couture, soudure ou collage.

Toutefois, dans certains cas, et notamment dans le cas où l'article de protection est un gant, on préfère :
- d'une part, que cet article de protection soit multicouche, c'est-à-dire qu'il comprenne au moins une couche en matériau élastomère selon l'invention prise en sandwich entre au moins deux couches en un autre matériau élastomère ; et
- d'autre part, qu'il soit fait d'une seule pièce de sorte à ce qu'il ne présente aucune zone où l'atténuation des rayonnements ionisants pourrait être diminuée en raison de la présence d'une couture, d'une soudure, d'un adhésif ou analogue.

Dans ce cas, l'article de protection est avantageusement fabriqué par la technique classique de trempe qui consiste à former un objet en trempant un moule de forme appropriée dans une succession de bains résultant de la dissolution dans des solvants volatiles des matériaux élastomères destinés à entrer dans la constitution de cet objet.

Conformément à l'invention, l'article de protection contre les rayonnements ionisants est, de préférence, un gant et, plus spécialement, un gant destiné à la manipulation de poudres entrant dans la fabrication de combustibles nucléaires.

Aussi, l'invention a-t-elle encore pour objet un gant multicouche de protection contre les rayonnements ionisants, qui est caractérisé en ce qu'il comprend au moins une couche C2 en un matériau élastomère tel que précédemment défini, intercalée entre au moins deux couches, respectivement C1 et C3, en un autre matériau élastomère, ces deux couches pouvant être ou non identiques entre elles tant en ce qui concerne le matériau élastomère qui les constitue que leur épaisseur.

Conformément à l'invention, les couches C1 et C3 peuvent être en un matériau élastomère choisi parmi le caoutchouc naturel, les polyisoprènes de synthèse, les polybutadiènes, les polychloroprènes, les polyéthylènes chlorosulfonés, les polyuréthannes élastomères, les élastomères fluorés, les copolymères d'isoprène-isobutylène, les copolymères d'éthylène-propylène-diène, les copolymères séquencés de styrène-isoprène-styrène, les copolymères séquencés de styrène-éthylène-butylène-styrène, et leurs mélanges.

Toutefois, on préfère que ces couches soient en un polyuréthanne élastomère en raison des propriétés de résistance mécanique particulièrement intéressantes que présente ce type d'élastomère.

Par ailleurs, chacune des couches C1, C2 et C3 peut mesurer de 50 à 1500 µm d'épaisseur.

Avantageusement, la couche C2 mesure de 50 à 200 µm d'épaisseur tandis que les couches C1 et C3 mesurent de 150 à 300 pm d'épaisseur.

La manipulation de poudres de combustibles nucléaires s'effectuant en principe dans des boites à gants, le gant selon l'invention comprend, de préférence, une manchette, typiquement de forme tronconique, de même constitution que lui et mesurant de 25 à 100 cm de longueur et, mieux encore, de 50 à 80 cm de longueur, de sorte à pouvoir être utilisé dans une boite à gant.

Le gant selon l'invention peut être fabriqué par un procédé qui comprend au moins :
- la formation de la couche C1 par une ou plusieurs trempes successives d'un moule reproduisant la forme d'une main et de tout ou partie d'un avant-bras et d'un bras dans une solution du matériau élastomère choisi pour former cette couche ;
- la formation de la couche C2 par une ou plusieurs trempes du moule dans une solution du matériau élastomère selon l'invention ;
- la formation de la couche C3 par une ou plusieurs trempes du moule dans une solution du matériau élastomère choisi pour constituer cette couche ;
   chaque trempe étant immédiatement suivie d'une évaporation du solvant présent sur le moule ;
- le séchage du gant ainsi formé et, après retrait de ce gant du moule, une éventuelle vulcanisation.

Le gant selon l'invention présente de nombreux avantages.

En effet, il allie des propriétés remarquables d'atténuation des rayonnements ionisants - puisqu'il présente une capacité à atténuer ce type de rayonnement pouvant aller, en équivalent plomb, de 0,03 à 0,50 mm (selon l'épaisseur de la couche C2) - à une souplesse également remarquable puisque, par exemple, des gants comprenant une couche C2 de 100 µm d'épaisseur (et assurant une protection en équivalent plomb de 0,03 mm) se sont révélés présenter quasiment la même souplesse que celle de gants d'épaisseur comparable mais ne contenant pas de charge radio-opaque.

Il présente de plus des propriétés très satisfaisantes de résistance mécanique.

Il contient, comme charge radio-opaque, une poudre comprenant des oxydes métalliques qui ne présentent pas de toxicité connue à ce jour pour la santé humaine et l'environnement en sorte que l'élimination des déchets issus de sa fabrication ne nécessite pas de filière spécifique de collecte et de traitement. De manière similaire, l'élimination des gants après usage ne nécessite pas de filière spécifique autre que celle imposée par une éventuelle contamination de ces gants par des matières radioactives.

Enfin, il est simple à fabriquer et se prête à des traitements complémentaires tels qu'une stérilisation.

De par ses propriétés, le gant selon l'invention est particulièrement intéressant pour assurer une protection contre les rayonnements ionisants émis par des poudres de combustibles nucléaires, notamment au plutonium.

Toutefois, il est également possible d'utiliser ce gant dans tous les autres domaines où une protection contre les rayonnements ionisants peut être recherchée comme l'imagerie médicale (radiologie, scannographie, ...), la radiologie interventionnelle, la médecine nucléaire (scintigraphie, radiothérapie, ...), le traitement des matières plastiques, l'inspection et le contrôle de pièces manufacturées, etc.

D'autres caractéristiques et avantages de l'invention apparaîtront mieux à la lecture du complément de description qui suit, qui se rapporte à des exemples de fabrication d'un matériau élastomère et d'un gant selon l'invention ainsi que de démonstration des propriétés de radio-atténuation et des propriétés mécaniques de gants conformes à l'invention.

Bien entendu, ces exemples ne sont donnés qu'à titre d'illustrations de l'objet de l'invention et ne constituent en aucun cas une limitation de cet objet.

### EXPOSÉ DÉTAILLÉ DE MODES DE RÉALISATION PARTICULIERS

### Exemple 1 : Fabrication d'un matériau élastomère selon l'invention

On fabrique un matériau élastomère selon l'invention en mélangeant :
* 100 parties en masse d'un polychloroprène (Neoprene^{®} WRT - DuPont Performance Elastomers) ;
* 267 parties en masse d'une poudre de trioxyde de bismuth constituée de particules de taille inférieure à 20 µm ;
* 33 parties en masse d'une poudre de trioxyde de lanthane de qualité optique, constituée de particules mesurant en moyenne 25 µm environ ; et
* 33 parties en masse d'une poudre de trioxyde de tungstène, constituée de particules de taille inférieure à 250 µm ;
dans un mélangeur interne adapté à la formulation de caoutchoucs, puis en soumettant le mélange résultant à un calandrage (lequel permet de compléter l'homogénéisation de ce mélange), à un étirage en bandes puis à une granulation de manière à obtenir des granulés sensiblement cubiques dont les arêtes mesurent de l'ordre de 0,5 cm.

Ces granulés sont légèrement talqués pour éviter qu'ils ne s'agglomèrent les uns aux autres en attendant d'être utilisés.

### Exemple 2 : Fabrication d'un gant conforme à l'invention

On fabrique, par un procédé de trempe, un gant comprenant une couche C2 formée d'un matériau élastomère selon l'invention et qui est intercalée entre deux couches, respectivement C1 et C3, formées d'un polyuréthanne élastomère.

Pour ce faire, on prépare tout d'abord deux bains dont l'un va permettre de réaliser les couches C1 et C3 tandis que l'autre va permettre de réaliser la couche intermédiaire C2.

Le premier bain est préparé, comme connu en soi dans l'état de la technique, par dissolution de 100 parties en masse d'un polyuréthanne préréticulé thermoplastique aromatique dans 500 parties en masse d'un solvant cétonique, puis filtration et dégazage de la solution résultante par mise au repos pendant 24 heures.

Le deuxième bain est préparé par dissolution de 100 parties en masse de granulés tels qu'obtenus dans l'exemple 1 ci-avant, dans 92,225 parties en masse de toluène, dans un mixer à hélices tournant à une vitesse de 1500 tours/minute et ce, pendant environ deux heures. On filtre la solution résultante par passage sur un tamis à mailles de 160 µm. Puis, on mesure sa viscosité (selon la norme AFNOR NFT 30-014) et sa teneur en extrait sec (au moyen d'un dessiccateur halogène Mettler Toledo) et, si nécessaire, on procède à un ajustement de ces deux paramètres de sorte que le premier se situe aux environs de 180 Pa.s et que le deuxième soit de l'ordre de 50%. On dégaze alors la solution en la laissant au repos pendant 24 heures.

Une fois les deux bains prêts, on procède à cinq trempes successives d'un moule en porcelaine en forme de main dans le premier bain pour former la couche C1 (qui constituera la face interne du gant), puis à une trempe du moule dans le deuxième bain pour former la couche C2, puis à quatre trempes successives du moule dans le premier bain pour former la couche C3 (qui constituera la face externe du gant), étant entendu que chaque trempe est immédiatement suivie d'une opération consistant à évaporer le solvant présent sur le moule et que l'on réalise à température ambiante sous un extracteur.

A l'issue de la dernière évaporation de solvant, on met le gant à sécher plusieurs heures dans un four tunnel dont la température ne dépasse pas 100°C puis on le retire du moule.

On obtient ainsi un gant dont la couche C2 mesure environ 100 µm d'épaisseur et dont les couches C1 et C3 mesurent chacune environ 200 µm d'épaisseur.

### Exemple 3 : Propriétés de radio-atténuation et propriétés mécaniques de gants conformes à l'invention

### 3.1. Propriétés de radio-atténuation

Des gants tels qu'obtenus à l'exemple 2 ci-avant ont été soumis à des tests visant à apprécier leur capacité à atténuer les rayonnements y émis par des poudres entrant dans la fabrication de combustibles nucléaires.

Pour ce faire, ils ont été utilisés sur des boites à gants dévolues à la manipulation de poudres entrant dans la fabrication de combustibles nucléaires, en exploitation représentative d'une dosimétrie significative.

Ont ainsi été obtenus des facteurs d'atténuation des rayonnements γ allant de 1,5 à 4, soit des facteurs équivalents à ceux obtenus avec les gants plombifères habituellement utilisés sur ces boites à gants, lesquels comprennent une couche de 100 µm d'épaisseur, formée de particules d'oxyde de plomb (litharge) dispersées dans un polychloroprène, entre deux couches en polyuréthanne élastomère.

### 3.2. Propriétés mécaniques

Des gants conformes à l'invention (ci-après G1 à G5), présentant une épaisseur allant de 600 à 700 µm et comprenant une couche C2 identique, dans sa composition et son épaisseur, à la couche C2 du gant fabriqué dans l'exemple 2 ci-dessus, intercalée entre deux couches C1 et C3 en polyuréthanne élastomère, ont été soumis à des essais de traction conformément à la norme AFNOR NFT 46-002.

Le tableau 1 ci-après présente, pour chacun des gants testés, les résultats obtenus en termes de résistance à la rupture, de force maximale à la rupture, d'allongement à la rupture et de modules d'élasticité à 20% et 100% d'allongement lors de ces essais ainsi que ceux obtenus dans les mêmes conditions pour des gants d'épaisseur comparable mais uniquement constitués par le polyuréthanne élastomère (ci-après R1 à R5).

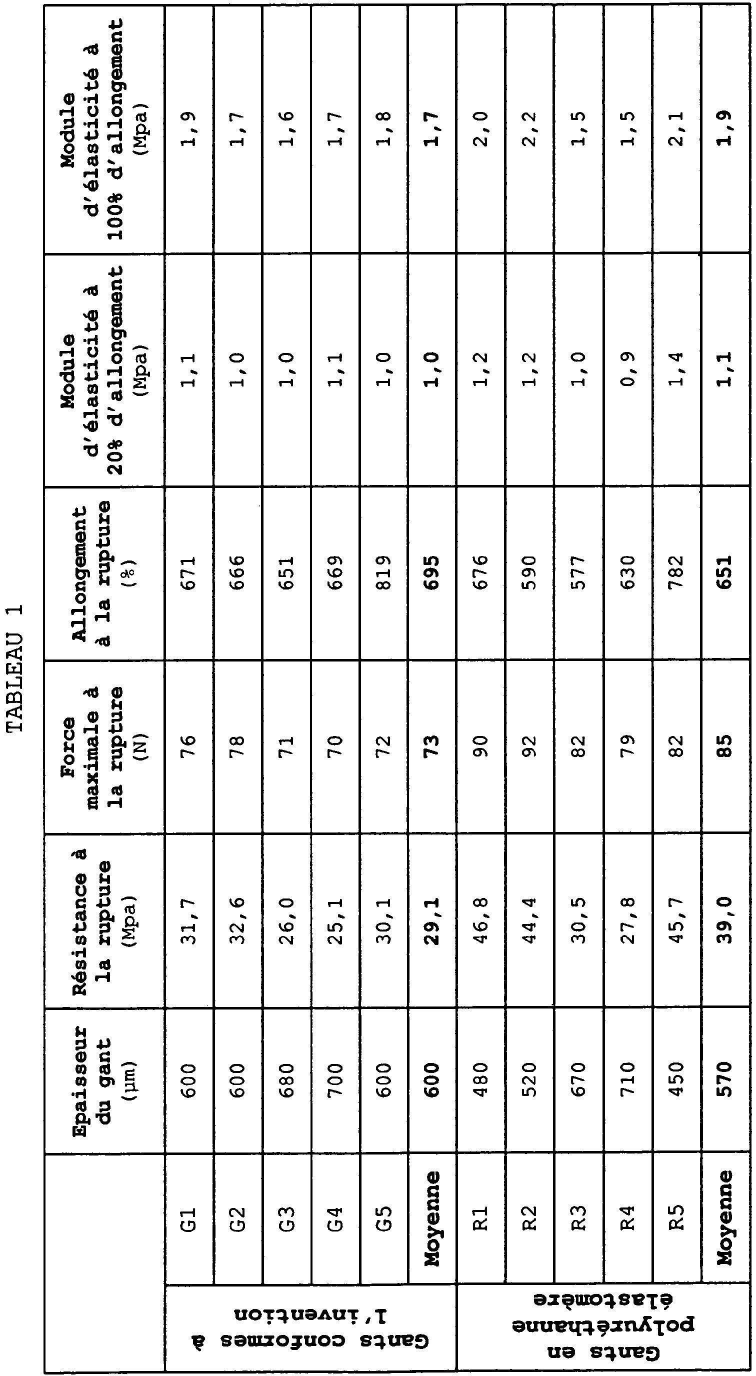

Ce tableau montre que les modules d'élasticité à 20% et 100% d'allongement, et donc la souplesse des gants conformes à l'invention, sont équivalents à ceux de gants en polyuréthanne élastomère, d'épaisseur comparable mais exempts de toute couche chargée en métaux ou en oxydes métalliques.

Il montre aussi que les propriétés de résistance mécanique des gants conformes à l'invention sont également très satisfaisantes.

### REFERENCES CITEES

[1] Brevet US 5,548,125
[2] Demande de brevet US 2004/0262546
[3] Demande de brevet FR 2 911 991

## Revendications

1. Matériau élastomère du type comprenant un élastomère dans lequel est dispersée une poudre d'oxydes métalliques, qui est **caractérisé en ce que** la poudre d'oxydes métalliques comprend de 70 à 90% en masse de trioxyde de bismuth, de 5 à 15% en masse de trioxyde de tungstène et de 5 à 15% de trioxyde de lanthane.

2. Matériau selon la revendication 1, **caractérisé en ce que** l'élastomère représente de 15 à 35% en masse de la masse du matériau tandis que la poudre d'oxydes métalliques représente de 65 à 85% en masse de la masse du matériau.

3. Matériau selon la revendication 1 ou la revendication 2, **caractérisé en ce que** l'élastomère représente 25 ± 2% en masse de la masse du matériau tandis que la poudre d'oxydes métalliques représente 75 ± 2% en masse de la masse du matériau.

4. Matériau selon l'une quelconque des revendications précédentes, **caractérisé en ce que** la poudre d'oxydes métalliques comprend 80 ± 2% en masse de trioxyde de bismuth, 10 ± 1% en masse de trioxyde de tungstène et 10 ± 1% de trioxyde de lanthane.

5. Matériau selon l'une quelconque des revendications précédentes, **caractérisé en ce que** la poudre d'oxydes métalliques est constituée de particules dont au moins 90% en nombre ont une taille comprise entre 1 et 100 µm.

6. Matériau élastomère selon l'une quelconque des revendications précédentes, **caractérisé en ce que** la poudre d'oxydes métalliques est constituée de particules dont au moins 80% en nombre ont une taille comprise entre 1 et 50 µm.

7. Matériau selon l'une quelconque des revendications précédentes, **caractérisé en ce que** l'élastomère est choisi parmi le caoutchouc naturel, les polyisoprènes de synthèse, les polybutadiènes, les polychloroprènes, les polyéthylènes chlorosulfonés, les polyuréthannes élastomères, les élastomères fluorés, les copolymères d'isoprène-isobutylène, les copolymères d'éthylène-propylène-diène, les copolymères séquencés de styrène-isoprène-styrène, les copolymères séquencés de styrène-éthylène-butylène-styrène, et leurs mélanges.

8. Matériau selon la revendication 7, **caractérisé en ce que** l'élastomère est un polychloroprène.

9. Matériau selon l'une quelconque des revendications précédentes, **caractérisé en ce qu'**il comprend un ou plusieurs adjuvants choisis parmi les agents plastifiants, les agents flexibilisants, les agents antistatiques, les agents lubrifiants, les promoteurs d'adhérence et les colorants.

10. Utilisation d'un matériau élastomère selon l'une quelconque des revendications 1 à 9 pour la fabrication d'un article de protection contre les rayonnements ionisants.

11. Utilisation selon la revendication 10, **caractérisée en ce que** l'article de protection est un tablier, une chasuble, une veste, une jupe, un gant, une manchette, un protège-thyroïde, un protège-gonades, un bandeau de protection oculaire, une brassière de protection mammaire, un champ opératoire ou un rideau.

12. Utilisation selon la revendication 10 ou la revendication 11, **caractérisée en ce que** l'article de protection est un gant et, plus spécialement, un gant pour la manipulation de poudres de combustibles nucléaires.

13. Gant multicouche de protection contre les rayonnements ionisants, **caractérisé en ce qu'**il comprend au moins une couche C2 en un matériau élastomère selon l'une quelconque des revendications 1 à 9, intercalée entre au moins deux couches, respectivement C1 et C3, en un autre matériau élastomère, les couches C1 et C3 pouvant être ou non identiques entre elles.

14. Gant selon la revendication 13, **caractérisé en ce que** les couches C1 et C3 sont en un matériau élastomère choisi parmi le caoutchouc naturel, les polyisoprènes de synthèse, les polybutadiènes, les polychloroprènes, les polyéthylènes chlorosulfonés, les polyuréthannes élastomères, les élastomères fluorés, les copolymères d'isoprène-isobutylène, les copolymères d'éthylène-propylène-diène, les copolymères séquencés de styrène-isoprène-styrène, les copolymères séquencés de styrène-éthylène-butylène-styrène, et leurs mélanges.

15. Gant selon la revendication 14, **caractérisé en ce que** les couches C1 et C3 sont en un polyuréthanne élastomère.

16. Gant selon l'une quelconque des revendications 13 à 15, **caractérisé en ce que** chacune des couches du gant mesure de 50 à 1500 µm d'épaisseur.

17. Gant selon la revendication 16, **caractérisé en ce que** la couche C2 mesure de 50 à 200 µm d'épaisseur tandis que les couches C1 et C3 mesurent de 150 à 300 µm d'épaisseur.

18. Gant selon l'une quelconque des revendications 13 à 17, **caractérisé en ce qu'**il comprend une manchette de même constitution que lui, de 25 à 100 cm de longueur.

19. Utilisation d'un gant selon l'une quelconque des revendications 13 à 18 pour la protection contre les rayonnements ionisants émis par des poudres de combustibles nucléaires, notamment au plutonium.

## Patentansprüche

1. Elastomeres Material vom Typ umfassend ein Elastomer, in welchem ein Metalloxidpulver verteilt ist, das **dadurch gekennzeichnet ist, dass** das Metalloxidpulver 70 bis 90 Massenprozent Bismuttrioxid, 5 bis 15 Massenprozent Wolframtrioxid und 5 bis 15% Lanthantrioxid umfaßt.

2. Material nach Anspruch 1, **dadurch gekennzeichnet, dass** das Elastomer 15 bis 35 Massenprozent der Masse des Materials repräsentiert, wohingegen das Metalloxidpulver 65 bis 85 Massenprozent der Masse des Materials repräsentiert.

3. Material nach Anspruch 1 oder Anspruch 2, **dadurch gekennzeichnet, dass** das Elastomer 25 ±2 Massenprozent der Masse des Materials repräsentiert, wohingegen das Metalloxidpulver 75 ±2 Massenprozent der Masse des Materials repräsentiert.

4. Material nach einem der vorhergehenden Ansprüche, **dadurch gekennzeichnet, dass** das Metalloxidpulver 80 ±2 Massenprozent Bismuttrioxid, 10 ±1 Massenprozent Wolframtrioxid und 10 ±1% Lanthantrioxid enthält.

5. Material nach einem der vorhergehenden Ansprüche, **dadurch gekennzeichnet, dass** das Metalloxidpulver aus Partikeln gebildet ist, von denen wenigstens 90 Anzahlprozent eine Größe haben, die zwischen 1 und 100 µm enthalten ist.

6. Elastomermaterial nach einem der vorhergehenden Ansprüche, **dadurch gekennzeichnet, dass** das Metalloxidpulver aus Partikeln gebildet ist, von denen wenigstens 80 Anzahlprozent eine Größe haben, die zwischen 1 und 50 µm enthalten ist.

7. Material nach einem der vorhergehenden Ansprüche, **dadurch gekennzeichnet, dass** das Elastomer ausgewählt ist aus Naturkautschuk, den Synthese-Polyisoprenen, den Polybutadienen, den Polychloroprenen, den chlorsulfonierten Polyethylenen, den elastomeren Polyurethanen, den fluorierten Elastomeren, den Isopren-Isobutylen-Copolymeren, den Ethylen-Propylen-Dien-Copolymeren, den sequenzierten Styrol-Isopren-Styrol-Copolymeren, den sequenzierten Styrol-Ethylen-Butylen-Styrol-Copolymeren und ihren Mischungen.

8. Material nach Anspruch 7, **dadurch gekennzeichnet, dass** das Elastomer ein Polychloropren ist.

9. Material nach einem der vorhergehenden Ansprüche, **dadurch gekennzeichnet, dass** es einen oder mehrere Zusatzstoffe enthält, ausgewählt aus den weichmachenden Agenzien, den flexibilisierenden Agenzien, den antistatischen Agenzien, den schmierfähigen Agenzien, den Haftbeschleunigern und den Farbstoffen.

10. Verwendung eines elastomeren Materials nach einem der Ansprüche 1 bis 9 für die Herstellung eines Artikels zum Schutz gegen ionisierende Strahlen.

11. Verwendung nach Anspruch 10, **dadurch gekennzeichnet, dass** der Schutzartikel eine Schürze, ein Gewand, eine Weste, ein Rock, ein Handschuh, eine Manschette, ein Schilddrüsenschutz, ein Gonadenschutz, eine Augenschutzbinde, ein Brustschutz-BH, eine Arbeitsbox oder ein Vorhang ist.

12. Verwendung nach Anspruch 10 oder Anspruch 11, **dadurch gekennzeichnet, dass** der Schutzartikel ein Handschuh und insbesondere ein Handschuh zur Bearbeitung von Pulvern von Kernbrennstoffen ist.

13. Vielschichtiger Handschuh zum Schutz vor ionisierenden Strahlen, **dadurch gekennzeichnet, dass** er wenigstens eine Schicht C2 aus einem elastomeren Material nach einem der Ansprüche 1 bis 9 umfaßt, die zwischen wenigstens zwei Schichten C1 bzw. C3 aus einem anderen elastomeren Material eingefügt ist, wobei die Schichten C1 und C3 miteinander identisch sein können oder nicht.

14. Handschuh nach Anspruch 13, **dadurch gekennzeichnet, dass** die Schichten C1 und C3 aus einem elastomeren Material sind, ausgewählt aus Naturkautschuk, den Synthese-Polyisoprenen, den Polybutadienen, den Polychloroprenen, den chlorsulfonierten Polyethylenen, den elastomeren Polyurethanen, den fluorierten Elastomeren, den Isopren-Isobutylen-Copolymeren, den Ethylen-Propylen-Dien-Copolymeren, den sequenzierten Styrol-Isopren-Styrol-Copolymeren, den sequenzierten Styrol-Ethylen-Butylen-Styrol-Copolymeren und ihren Mischungen.

15. Handschuh nach Anspruch 14, **dadurch gekennzeichnet, dass** die Schichten C1 und C3 aus einem elastomeren Polyurethan sind.

16. Handschuh nach einem der Ansprüche 13 bis 15, **dadurch gekennzeichnet, dass** jede der Schichten des Handschuhs eine Dicke von 50 bis 1500 µm hat.

17. Handschuh nach Anspruch 16, **dadurch gekennzeichnet, dass** die Schicht C2 eine Dicke von 50 bis 200 µm hat, wohingegen die Schichten C1 und C3 eine Dicke von 150 bis 300 µm haben.

18. Handschuh nach einem der Ansprüche 13 bis 17, **dadurch gekennzeichnet, dass** er eine Manschette umfaßt, die die gleiche Gestaltung wie er selbst aufweist, mit einer Länge von 25 bis 100 cm.

19. Verwendung eines Handschuhs nach einem der Ansprüche 13 bis 18 zum Schutz gegen ionisierende Strahlen, die von Pulvern von Kernbrennstoffen emittiert werden, insbesondere Plutonium.

## Claims

1. An elastomeric material of the type comprising an elastomer in which is dispersed a powder of metal oxides, which is **characterized in that** the powder of metal oxides comprises from 70 to 90% by mass of bismuth trioxide, from 5 to 15% by mass of tungsten trioxide and from 5 to 15% of lanthanum trioxide.

2. The material according to claim 1, **characterized in that** the elastomer represents from 15 to 35% by mass of the mass of the material while the powder of metal oxides represents from 65 to 85% by mass of the mass of the material.

3. The material according to claim 1 or claim 2, **characterized in that** the elastomer represents 25 ± 2% by mass of the mass of the material while the powder of metal oxides represents 75 ± 2% by mass of the mass of the material.

4. The material according to any of the preceding claims, **characterized in that** the powder of metal oxides comprises 80 ± 2% by mass of bismuth trioxide, 10 ± 1% by mass of tungsten trioxide and 10 ± 1% of lanthanum trioxide.

5. The material according to any of the preceding claims, **characterized in that** the powder of metal oxides consists of particles, at least 90% by number of which have a size comprised between 1 and 100 µm.

6. The elastomeric material according to any of the preceding claims, **characterized in that** the powder of metal oxides consists of particles, at least 80% by number of which have a size comprised between 1 and 50 µm.

7. The material according to any of the preceding claims, **characterized in that** the elastomer is selected from natural rubber, synthetic polyisoprenes, polybutadienes, polychloroprenes, chlorosulfonated polyethylenes, elastomeric polyurethanes, fluorinated elastomers, isoprene-isobutylene copolymers, ethylene-propylene-diene copolymers, styrene-isoprene-styrene block copolymers, styrene-ethylene-butylene-styrene block copolymers and mixtures thereof.

8. The material according to claim 7, **characterized in that** the elastomer is a polychloroprene.

9. The material according to the preceding claims, **characterized in that** it comprises one or more more adjuvants selected from plasticizers, flexibilizing agents, antistatic agents, lubricating agents, adherence promoters and coloring agents.

10. The use of an elastomeric material according to any of the claims 1 to 9 for making a protective article against ionizing radiations.

11. The use according to claim 10, **characterized in that** the protective article is an apron, chasuble, jacket, skirt, glove, sleeve, thyroid protection, gonad protection, eye protection band, mammary protective bra, surgical drape or a curtain.

12. The use according to claim 10 or claim 11, **characterized in that** the protective article is a glove and, more especially, a glove for handling nuclear fuel powders.

13. A protective multilayer glove against ionizing radiations, **characterized in that** it comprises at least one layer C2 in an elastomeric material according to any of claims 1 to 9, inserted between at least two layers, C1 and C3 respectively, in another elastomeric material, the layers C1 and C3 being identical with each other or not.

14. The glove according to claim 13, **characterized in that** the layers C1 and C3 are in an elastomeric material selected from natural rubber, synthetic polyisoprenes, polybutadienes, polychloroprenes, chlorosulfonated polyethylenes, elastomeric polyurethanes, fluorinated elastomers, isoprene-isobutylene copolymers, ethylene-propylene-diene copolymer, styrene-isoprene-styrene block copolymers, styrene-ethylene-butylene-styrene block copolymers, and mixtures thereof.

15. The glove according to claim 14, **characterized in that** the layers C1 and C3 are in elastomeric polyurethane.

16. The glove according to any of claims 13 to 15, **characterized in that** each of the layers of the glove has a thickness from 50 to 1,500 µm.

17. The glove according to claim 16, **characterized in that** the layer C2 has a thickness from 50 to 200 µm while the layers C1 and C3 have a thickness from 150 to 300 µm.

18. The glove according to any of claims 13 to 17, **characterized in that** it comprises a sleeve with the same composition as it, with a length from 25 to 100 cm.

19. The use of a glove according to any of claims 13 to 18 for protection against ionizing radiations emitted by powders of nuclear fuels, notably with plutonium.
